# EUROPEAN PATENT APPLICATION

(11) **EP 1 852 210 A2**
(43) Date of publication of application: **07.11.2007**
(21) Application number: 07251828.5
(22) Date of filing: 01.05.2007
(51) Int. Cl.: B23K 26/42, B23K 26/00, F16P 3/14

(54) **Method for manually laser welding metallic parts**

(30) Priority: 04.05.2006 US 417598
(71) Applicant: United Technologies Corporation, Hartford, CT 06101 (US)
(72) Inventor: Moor, James J., Torrington, CT 06790 (US); Shubert, Gary C., East Hampton, CT 06424 (US)
(74) Representative: Leckey, David Herbert

(57) **Abstract**

A method for welding a metal part (50) with a laser (116) that generates a laser beam (18), where the method includes manually feeding successive portions of a filler material (52) adjacent the metal part (50) and in a pathway of the laser beam (18), generating the laser beam (18) for melting the filler material (52), and cooling the melted filler material (52) for fusing the filler material (52) to the metal part (50). The method further includes controlling an intensity of the laser beam (16) based on a sensed position of a user's hand (26) relative to the laser beam (18).

## Description

### BACKGROUND OF THE INVENTION

The present invention relates to laser welding techniques. In particular, the present invention relates to a method of manually welding metal parts with a laser while protecting a user with a safety control system.

Lasers generate laser beams that are used for a variety of industrial applications, such as laser welding. Laser welding is a suitable technique for restoring damaged metal parts and for joining multiple metal parts. With respect to restoring damaged metal parts, industrial metal parts may be damaged due to chemical and frictional erosion over extended periods of use. Such damage typically includes cracks or holes in the metal parts, which prevents the metal parts from functioning properly. In lieu of replacing the damaged metal parts with new parts, the damaged metal parts may be restored via welding processes (e.g., laser welding), in which filler materials are melted and fused over the cracks and holes to seal up the damage. The restored metal parts may then be reused for the given industrial applications.

Due to the nature of laser beams, numerous safety measures have been implemented to protect users from bodily injury. In response to safety concerns, the American National Standard Institute (ANSI) presented ANSI Z136.1-2000, which provides guidelines and recommendations for the safe use of a variety of lasers. One common technique for avoiding injuries and bums from accidental exposures to laser beams involves the use of automated laser welding systems, which eliminate direct user interaction. Automated laser welding systems attempt to mimic manual welding via computer vision, neural networks, and computer algorithms. However, because of the variety of part configurations required, there is a need for laser welding techniques that allow good part manipulation while also reducing the risk of user injuries.

### BRIEF SUMMARY OF THE INVENTION

The present invention relates to a method for welding a metal part with a laser that generates a laser beam. The method includes manually feeding successive portions of a filler material with a hand of a user to a process location that is adjacent the metal part and is in a pathway of the laser beam. The method also includes generating the laser beam, which melts the manually fed successive portions of the filler material, and cooling the melted successive portions of the filler material, thereby allowing the melted successive portions to fuse to the metal part. Furthermore, the method includes controlling an intensity of the laser beam based on a sensed position of the user's hand relative to the laser beam.

### BRIEF DESCRIPTION OF THE DRAWINGS

FIG. 1 is a side-view illustration of a laser apparatus, which includes a laser control safety system having a glove in a retracted position.
FIG. 2 is a side-view illustration of the laser apparatus, which includes the laser control safety system having the glove in the retracted position, and further includes a metal tube and filler material supply spool.
FIG. 3 is a side-view illustration of the laser apparatus, which includes the laser control safety system having the glove in a partially-extended position during a laser welding process.
FIG. 4 is a side-view illustration of the laser apparatus, which includes the laser control safety system having the glove in an extended position.
FIG. 5 is a side-view illustration of a laser apparatus, which includes an alternative laser control safety system having a glove in a retracted position.
FIG. 6 is a side-view illustration of the laser apparatus, which includes the alternative laser control safety system having the glove in a partially-extended position during a laser welding process.
FIG. 7 is a side-view illustration of the laser apparatus, which includes the alternative laser control safety system having the glove in an extended position.

### DETAILED DESCRIPTION

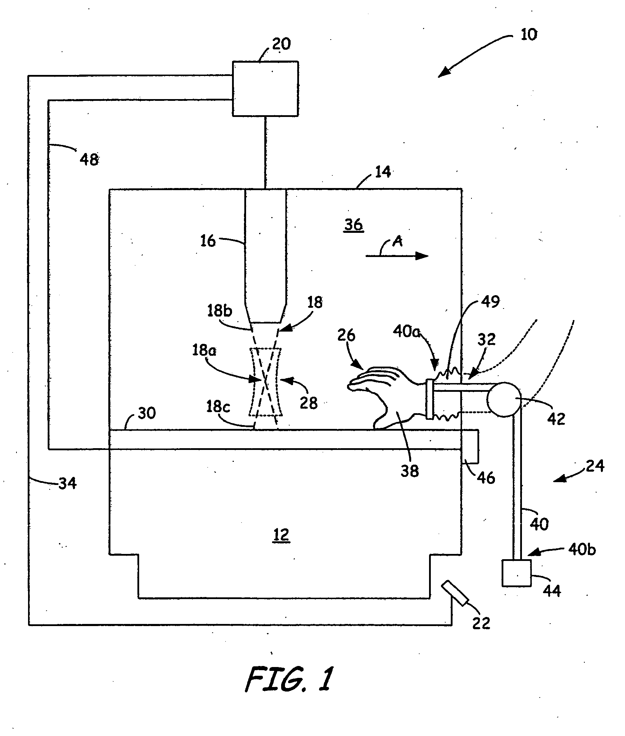

FIGS. 1-4 are side-view illustrations of laser apparatus 10, which is an industrial laser system suitable for welding metal parts by laser radiation. As used herein, the term "welding" refers to a technique for joining at least two metallic parts with an application of heat (e.g., heat from laser radiation), and includes restoration welding with a filler material, and brazing. Laser apparatus 10 includes base 12, housing 14, laser 16, laser beam 18, control 20, pedal actuator 22, and safety system 24.

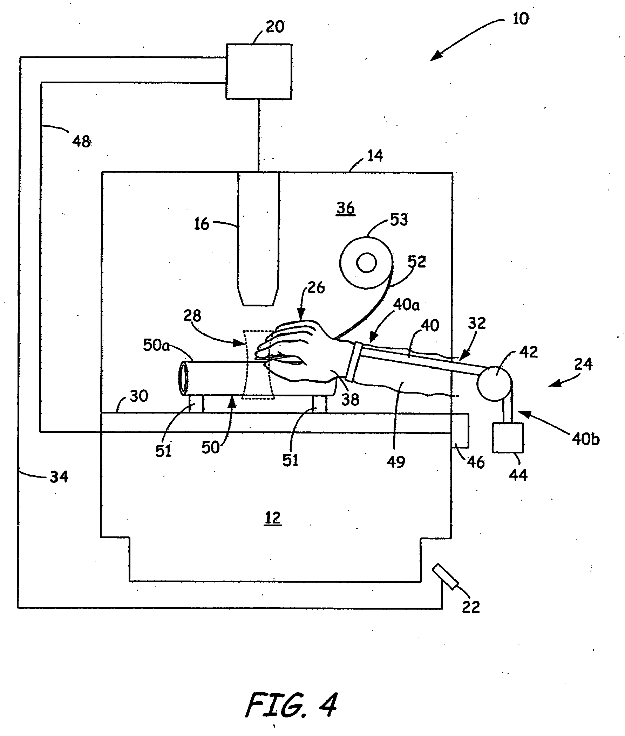

FIGS. 1-3 depict hand 26 of a user disposed at offset locations from laser beam 18, and outside of nominal hazard zone 28, where laser beam 18 is generated at an operating level intensity by laser 16 for welding metal parts. FIG. 4 depicts user's hand 26 disposed within nominal hazard zone 28 of laser beam 18. As discussed below, safety system 24 controls laser 16 to reduce the intensity of laser beam 18 from the operating level to a standby level when user's hand 26 moves within nominal hazard zone 28 of laser beam 18. This reduces the risk of potential injuries from exposure to laser beam 18.

As shown in FIG. 1, base 12 is a support base for working with laser 16, and includes surface 30. Housing 14 is removably secured to base 12, and protects the user located outside of housing 14 from laser beam 18. Housing 14 includes opening 32 through which the user may extend hand 26 to reach within housing 14. Housing 14 may be fabricated from a variety of protective materials such as sheet metal, safety glass, and combinations of these and other materials. Housing 14 may also include port holes for allowing the user to insert hand 26 within housing 14. Housing 14 may be manually or mechanically raised and lowered relative to base 12 to allow the user to insert one or more metal parts on surface 30 prior to laser welding. Additionally, housing 14 may include a housing door for insertion of metal parts.

Laser 16 is an industrial laser configured for laser welding one or more metal parts. Laser 16 is disposed within housing 14 to generate laser beam 18. While laser 16 is shown entirely within housing 14, portions of laser 16 may alternatively be disposed outside of housing 14 so long as laser beam 18 is emitted within housing 14.

Laser beam 18 has a maximum power density at focal point 18a, which is the portion of laser beam 18 where the metal parts may be processed. Laser beam 18 also includes converging portion 18b located between laser 16 and focal point 18a, and diverging portion 18c located between focal point 18a and surface 30. At converging portion 18b, the power density of laser beam 18 converges toward focal point 18a. Correspondingly, at diverging portion 18c, the power density of laser beam 18 diverges from focal point 18a.

Laser 16 may be vertically raised and lowered relative to surface 30 to vertically adjust the location of focal point 18a of laser beam 18. This is useful for processing metal parts at different heights. Focal point 18a is offset at a fixed location relative to laser 16 based on optical settings of laser 16. As such, vertical movement of laser 16 results in an equal movement of focal point 18a. Correspondingly, the volumetric dimensions of converging portion 18b remain substantially unchanged when laser 16 is vertically moved. However, the volumetric dimensions of diverging portion 18c will vary based on the distance between laser 16 and surface 30.

An example of suitable volumetric dimensions for converging portion 18b include an inverted cone having a height between laser 16 and focal point 18a ranging from about 5 centimeters to about 15 centimeters and a top base diameter of about 5 centimeters. Examples of suitable volumetric dimensions for diverging portion 18c include a cone having corresponding vectors to converging portion 18b with a height between focal point 18a and surface 30 ranging from about 7 centimeters to about 40 centimeters.

Control 20 is a programmable logic controller (PLC) that controls the operation of laser 16 based on received signals, including signals from pedal actuator 22 and safety system 24. Control 20 may control the operation of laser 16 in a variety of manners. For example, control 20 may cause laser 16 to generate laser beam 18 having an intensity at an operating level. The operating level provides suitable power for laser beam 18 to laser weld metal parts. Additionally, control 20 may cause laser 16 to reduce the intensity of laser beam 18 from the operating level to a standby level, which is a low or zero intensity level. Examples of suitable standby levels for laser beam 18 include intensities that substantially meet the exposure restrictions described in ANSI Z136.1-2000. The intensity of laser beam 18 may be reduced to the standby level by restricting power to laser 16, preventing power to laser 16, defocusing laser beam 18, redirecting laser beam 18, beam dumping (e.g., directing laser beam 18 into a water-cooled beam dump), and combinations thereof.

The user operates laser 16 with pedal actuator 22, which is a pedal-operated actuator switch for operating laser 16. Pedal actuator 22 is disposed adjacent base 12 and communicates with control 20 via line 34. Pedal actuator 22 switches from a first state to a second state when the user depresses pedal actuator 22, where the states of pedal actuator 22 dictate control of laser 16 by control 20. The first state (non-depressed) directs control 20 to deactivate laser 16, or alternatively, cause laser 16 to generate laser beam 18 at the standby level. The second state (depressed) directs control 20 to cause laser 16 to generate laser beam 18 at the operating level. As such, laser 16 requires the user to manually depress pedal actuator 22 to generate laser beam 18 at the operating level for laser welding.

In one embodiment, the intensity of laser beam 18 is increased based on the how far the user manually depresses pedal actuator 22. In this embodiment, the operating level of laser beam 18 may be obtained, for example, by fully depressing pedal actuator 22. If the user desires laser beam 18 to be generated at a lower intensity relative to the operating level, the user may partially depress pedal actuator 22. This embodiment provides a greater range of manual control over the intensity of laser beam 18.

Nominal hazard zone 28 of laser beam 18 is an hourglass-shaped volume located around laser beam 18 that represents a region of greatest risk of skin exposure to laser beam 18. As such, to reduce the risk of direct exposure to laser beam 18 at the operating level, hand 26 of the user should remain outside of nominal hazard zone 28 while laser beam 18 is generated.

Nominal hazard zone 28 is vertically centered around focal point 18a and extends around converging portion 18b and diverging portion 18c. The vertical distances that nominal hazard zone 28 extends above and below focal point 18a may vary based on the power intensity of laser beam 18. In one embodiment, shown in FIG. 1, nominal hazard zone 28 extends to a vertical distance above and below focal point 18a, beyond which the intensity of laser beam 18 is at a low-risk level. An example of suitable vertical distances for nominal hazard zone 28 to extend from focal point 18a include about 8 centimeters above focal point 18a and about 8 centimeters below focal point 18a. In an alternative embodiment, nominal hazard zone 28 may extend the entire vertical distance between laser 16 and surface 30. This encompasses the entire volume of laser beam 18.

As further shown in FIG. 1, nominal hazard zone 28 extends at a greater radial distance from focal point 18a than from converging portion 18b and diverging portion 18c. This is desirable because the greatest risk of injury from laser beam 18 occurs at focal point 18a, where laser beam 18 is at its highest intensity. Examples of suitable radial distances between focal point 18a and nominal hazard zone 28 range from about 0.5 centimeters to about 2.5 centimeters. Examples of suitable radial distances between converging portion 18b/ diverging portion 18c and nominal hazard zone 28 range from no radial distance to about the radial distance between focal point 18a and nominal hazard zone 28. While nominal hazard zone 28 is described herein as an hourglass-shaped volume, it is understood that nominal hazard zone 28 represents a region of greatest risk of exposure to laser beam 18. As such nominal hazard zone 28 may exhibit different shapes based on how laser beam 18 is generated from laser 16.

The remaining volume within housing 14 that is not occupied by nominal hazard zone 28 is referred to as secondary hazard zone 36 of laser beam 18, which is an ocular hazard zone. During laser welding, portions of laser beam 18 may reflect or scatter off the metal parts in a variety of directions. Housing 14 blocks the reflected and scattered portions of laser beam 18 from directly reaching the user's location outside of housing 14, particularly the user's eyes. However, housing 14 does not directly protect hand 26 of the user while disposed within housing 14.

Safety system 24 of the present invention protects hand 26 of the user while disposed within housing 14, such as when the user is manipulating metal parts within housing 14. Safety system 24 includes glove 38, tether 40, pulley 42, magnet 44, sensor 46, and line 48. Glove 38 is a protective barrier capable of receiving hand 26, and is secured to housing 14 around opening 32. Glove 38 includes ribbed portion 49, which is an accordion-like or bellows-like portion of glove 38 that is biased toward housing 14 in the direction of arrow A. As such, glove 38 is biased toward a retracted position, as shown in FIG. 1.

The material of glove 38 absorbs reflected and scattered portions of laser beam 18 within secondary hazard zone 36. This reduces the risk of potential exposure of hand 26 to laser radiation while disposed within housing 14. Examples of suitable materials for glove 38 include standard rubber glove compounds, such as nitrile-based compounds, neoprene-based compounds, styrene butadiene-based compounds, and combinations thereof. In alternative embodiments, glove 38 may be substituted for other protective barriers that provide exposure protection.

In addition to the exposure protection provided by glove 38, safety system 24 also protects the user by reducing the intensity of laser beam 18 to the standby level when hand 26 is within nominal hazard zone 28 of laser beam 18. This is accomplished with magnet 44 and sensor 46, where sensor 46 determines the position of hand 26 within housing 14 based on the distance between magnet 44 and sensor 46. Magnet 44 is a signal-producing component that emits a magnetic field, and is connected to glove 38 via tether 40.

Tether 40 includes first end 40a connected to glove 38 and second end 40b connected to magnet 44. In an alternative embodiment, tether 40 may be integrally formed with glove 38. In another alternative embodiment, where glove 38 is not used, first end 40a of tether 40 may be attached to hand 26 of the user (for example, at the wrist). Pulley 42 is rotatably secured at a fixed position that is offset from base 12 and housing 14. Tether 40 extends over pulley 42 such that lateral motion of first end 40a of tether 40 translates to vertical motion of second end 40b of tether 40.

Sensor 46 is a magnetically-actuated switch capable of sensing the magnetic field of magnet 44. Examples of suitable devices for sensor 46 include a Hall sensor and a reed switch. Sensor 46 is secured to base 12 and communicates with control 20 via line 48. Sensor 46 switches between a first state and second state based on whether sensor 46 senses the magnetic field of magnet 44. Sensor 46 is in the first state when the magnetic field is not sensed, and switches to the second state when the magnetic field is sensed.

The states of sensor 46 direct the control of laser 16 by control 20. The first state of sensor 46 does not direct control 20 to control laser 16 in any particular manner. As such, laser 16 generates laser beam 18 at the operating level when the user depresses pedal actuator 22. The second state of sensor 46, however, directs control 20 to cause laser 16 to reduce the intensity of laser beam 18 from the operating level to the standby level, regardless of the other received signals. As such, the signal associated with the second state of sensor 46 overrides signals from pedal actuator 22, and reduces the intensity of the laser beam 18 to the standby level even when pedal actuator 22 is in the second state.

Whether sensor 46 senses the magnetic field of magnet 44 is generally based on the distance between magnet 44 and sensor 46, which is correspondingly based on the position of hand 26 of the user. For example, when hand 26 is in the retracted position shown in FIG. 1, magnet 44 is too distant from sensor 46 for sensor 46 to sense the magnetic field of magnet 44. As such, laser 16 may generate laser beam 18 at the operating level for laser processing. However, if hand 26 moves far enough from the retracted position to enter nominal hazard zone 28, magnet 44 will move close enough to sensor 46 for sensor 46 to sense the magnetic field of magnet 44. The intensity of laser beam 16 will then be reduced to the standby level to protect hand 26 of the user from exposure to laser beam 18.

In alterative embodiments of the present invention, magnet 44 and sensor 46 may be substituted with other forms of signal-producing components and corresponding sensors, such as linear encoders, signal-threshold sensors that compare signal strengths to minimum signal thresholds, and other components known in the art. Additionally, magnet 44 may be movably connected to a guide rail to limit the range of lateral motion of magnet 44. Furthermore, glove 38 may be physically restrained by a tie back (e.g., a chain or a cable) connected to housing 14. The length of the tie back between housing 14 and glove 38 may be selected to physically prevent glove 38 from entering nominal hazard zone 28. In additional embodiments, physical barriers may be positioned adjacent the pathway of laser beam 18 to prevent hand 26 from reaching laser beam 18. For example, a metal, plastic, or glass cone may be placed around converging portion 18b, thereby physically preventing hand 26 from reaching converging portion 18b.

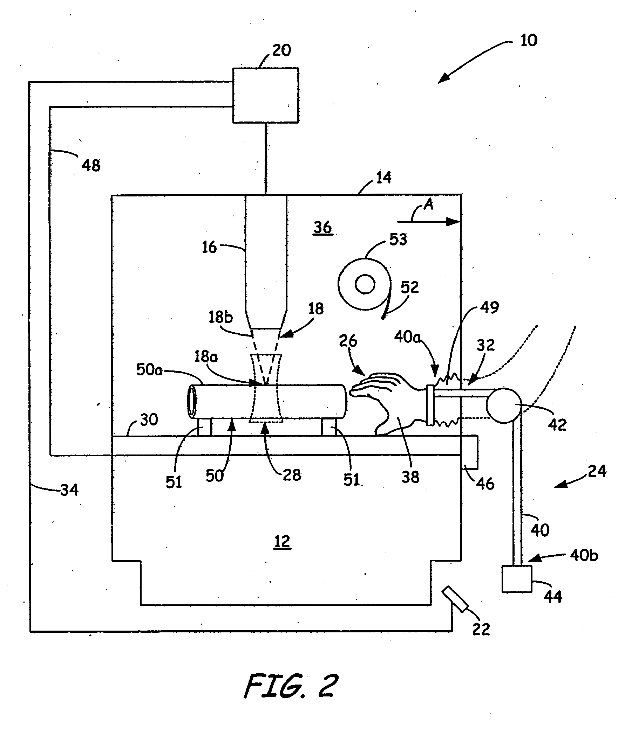

As shown in FIG. 2, metal tube 50 is placed within housing 14, and is retained above surface 30 via supports 51. Metal tube 50 includes outer surface 50a, which, for this example, is assumed to be damaged and in need of restoration for reuse. As shown, metal tube 50 is positioned such that focal point 18a intersects outer surface 50a. As a result, diverging portion 18c is not generated. Nonetheless, nominal hazard zone 28 remains unchanged because it is based on the pathway of laser beam 18, and is independent of metal parts that temporarily intersect portions of laser beam 18.

As further shown in FIG. 2, laser apparatus 10 also includes wire 52 and supply spool 53, where wire 52 is a continuous wire of filler material fed from supply spool 53. Examples of suitable filler materials for wire 52 include any type of metal that may be melted with laser beam 18 (e.g., steel, iron, copper, nickel, cobalt, titanium, brass, and alloys thereof) for restoring outer surface 50a of metal tube 50. In an alternative embodiment, the filler material may be provided as a rigid rod stock that is manipulated by the user during the laser welding process.

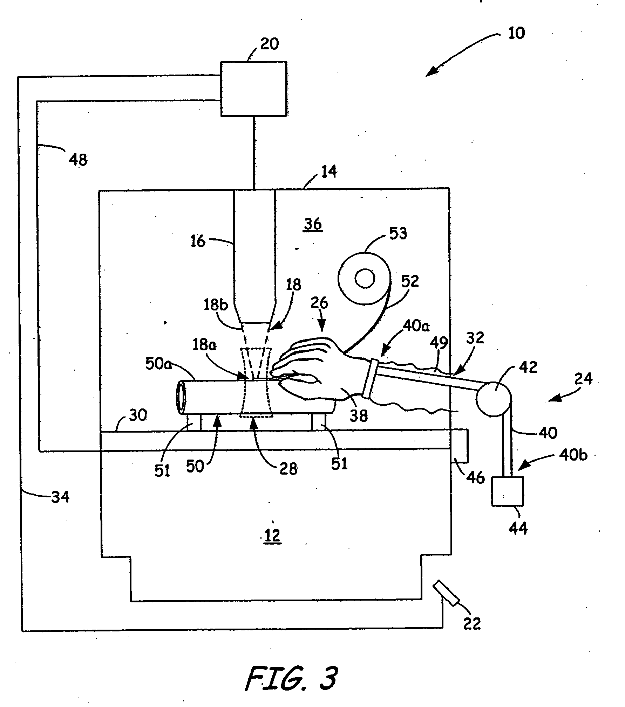

FIG. 3 shows glove 38 in a partially-extended position, where the user is manipulating wire 52 during a welding process with laser 16. The user extends glove 38 from the retracted position by applying a counter force greater than the bias force exerted by ribbed portion 49. Glove 38 may be moved from the retracted position to a variety of positions between and including the retracted position and an extended position. The user may also move glove 38 in any direction within housing 14, including an axial-rotating motion. As such, glove 38 provides a high level of free movement within housing 14, allowing the user to grasp and manipulate metal parts (e.g., wire 52). This is particularly beneficial for laser welding processes, where a high level of dexterity may be required to manipulate the metal parts.

During a welding operation, the user places metal tube 50 on supports 31 and adjusts the height of laser 16 such that focal point 18a is generally located at outer surface 50a of metal tube 50. The user then grasps wire 52 with hand 26, and manually feeds wire 52 to a process location that is adjacent outer surface 50a and is in a pathway of laser beam 18, as shown in FIG. 3. Typically, a length of wire 52 is cut from supply spool 53 prior to the welding process. The user then depresses pedal 22, thereby generating laser beam 18 at an operating level for laser welding. Laser beam 18 melts the portion of wire 52 in the pathway of laser beam 18, allowing the melted portion of wire 52 to fuse to outer surface 50a.

As discussed above, outer surface 50a is generally located at focal point 18a. As a result, wire 52 is positioned within converging portion 18b. This arrangement is beneficial because the energy of laser beam 18 is less focused at converging portion 18b compared to focal point 18a. This distributes the applied heat over a greater area of wire 52, thereby providing a more uniform melting of wire 52 and reducing the risk of superheating wire 52.

Because laser 16 is a fixed laser, metal tube 50 and wire 52 are moved relative to laser beam 18 to weld successive portions of metal tube 50. Because hand 26 is protected by safety system 24, metal tube 50 and wire 52 may be manually moved. For example, hand 26 may grasp and move both metal tube 50 and wire 52 relative to laser beam 18 for melting successive portions of wire 52, which fuse to successive portions of outer surface 50a of metal tube 50. Alternatively, the user may use a second hand (not shown) to move metal tube 50. In either alternative, successive portions of wire 52 are manually fed with hand 26 to the process location for welding the filler material to outer surface 50a. As successive welded portions of metal tube 50 move out of the pathway of laser beam 18, the melted filler material cools and fuses to outer surface 50a, thereby restoring outer surface 50a.

When welding large holes in metal parts, such as a large hole in outer surface 50a, successive portions of filler material are desirably fused to outer surface 50a and to previously fused portions of filler material in a parallel manner. Under this technique, multiple parallel bead paths of fused material are sequentially welded to seal the hole in outer surface 50a. Each pass desirably consumes about 30% to about 50% of a previously welded pass. This increases the strength of the resulting weld.

Because the user manually manipulates wire 52, the user may adjust the manipulations to account for a variety of processing factors. For example, the filler material of wire 52 is typically a memory material that retains the curvature induced by supply spool 53. This curvature also increases as wire 52 is consumed from supply spool 53 due to the tightening curvature of wire 52 around supply spool 53. Manually placing wire 52 at the processing location allows the user to correct for this increasing curvature and any other welding anomalies associated with filler material wire delivery.

As discussed above, during the laser welding operation, safety system 24 reduces the risk of potential injuries from exposure to laser beam 18. In one embodiment, magnet 44 and sensor 46 are positioned such that sensor 46 senses the magnetic field of magnet 44 and switches states when hand 26 of the user enters nominal hazard zone 28. When the user extends hand 26 from the retracted position toward nominal hazard zone 28, magnet 44 vertically raises. As such, magnet 44 moves closer to sensor 46. When hand 26 reaches nominal hazard zone 28, magnet 44 is close enough to sensor 46 for sensor 46 to sense the magnetic field of magnet 44. Control 20 then causes laser 16 to reduce the intensity of laser beam 18 to the standby level, as discussed above. This automatically reduces the intensity of laser beam 18 to a safe or zero-intensity level while hand 26 of the user is disposed within nominal hazard zone 28. Therefore, the user is not required to manually deactivate laser 16 to work within nominal hazard zone 28.

FIG. 4 shows glove 38 in an extended position, where user's hand 26 extends within nominal hazard zone 28. In this situation, the intensity of laser beam 18 is reduced to the standby level, which prevents laser beam 18 from injuring hand 26. When the user moves hand 26 toward the retracted position, magnet 44 vertically lowers, thereby moving away from sensor 46. As hand 26 exits nominal hazard zone 28, sensor 46 no longer senses the magnetic field of magnet 44. Sensor 46 then switches back to the first state, and the intensity of laser beam 18 increases back to the operating level in response to the user depressing pedal actuator 22..

Accordingly, while depressing pedal actuator 22, the user may repeatedly move hand 26 in and out nominal hazard zone 28 without the worry of accidental exposure to laser beam 18. Safety system 24 reduces the intensity of laser beam 18 to a safe or zero-intensity level while hand 26 is within nominal hazard zone 28 and allows the intensity of laser 16 increase back to the operating level when hand 26 leaves nominal hazard zone 28. This reduces the risk of exposure to laser beam 18, thereby increasing safety when welding with laser 16.

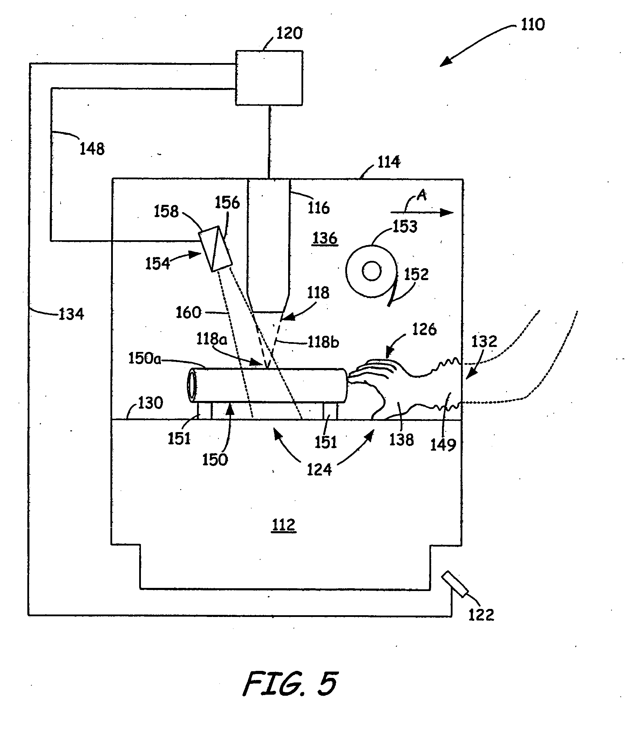

FIGS. 5-7 are side-view illustrations of laser apparatus 110, which is another industrial laser system suitable for processing work pieces by laser radiation. As shown in FIG. 5, laser apparatus 110 is similar to laser apparatus 10 in FIGS. 1-4 (respective reference labels are increased by 100), except that safety system 124 is used in place of safety system 24. Safety system 124 protects hand 126 of the user while disposed within housing 114, such as when the user is manipulating metal parts (e.g., metal tube 150 and wire 152) within housing 114. Safety system 124 includes glove 138 and emitter/sensor 154, which communicates with control 120 via line 148.

Glove 138 functions in the same manner as discussed above in FIG. 1 for glove 38. Glove 138 may absorb reflected and scattered portions of laser beam 118 within secondary hazard zone 136, and provides a high level of free movement within housing 114. Additionally, glove 138 may include fluorescent materials (e.g., ultraviolet (UV)-luminescent materials such as inks, pigments, and dyes) for allowing emitter/sensor 154 to detect the position of hand 126 of the user within housing 114. The fluorescent materials may be included in the molding materials used to fabricate glove 138, or alternatively, glove 138 may be encased in a coating, film, or wrapping that includes the fluorescent materials.

The fluorescent materials allow glove 138 to emit light at a particular wavelength (referred to herein as "signal-wavelength light") when glove 138 absorbs UV-wavelength light. In particular, when UV-wavelength light is directed at glove 138, electrons of the fluorescent materials in glove 138 absorb photons from the UV-wavelength light, causing the electrons to jump from their original energy states to higher energy states. Photons are then released from glove 138 when the electrons drop down to lower energy states. However, the lower energy states obtained differ from the original energy states, which results in the released photons having longer wavelengths than the UV-wavelength light. The particular wavelength of the photons emitted from glove 138 (i.e., the signal-wavelength light) generally depends on the types and concentrations of the fluorescent materials used.

Emitter/sensor 154 is disposed within housing 114 and is a combined emitter/sensor system that includes UV-beam emitter 156 and sensor 158. Example of suitable systems for emitter/sensor 154 include the trade designated "UVX 100" and "UVX 300" Luminescence Sensors, which are commercially available from EMX Industries, Inc., Cleveland, OH.

UV-beam emitter 156 is a signal-producing component that emits UV beam 160. UV beam 160 is a diverging beam directed toward surface 130, and which extends around laser beam 118, as shown in FIG. 3. Because surface 130 and metal tube 150 generally do not include fluorescent materials, surface 130 and the metal tube 150 do not emit signal-wavelength light. However, because glove 138 contains fluorescent materials, glove 138 absorbs portions of UV beam 160 while disposed within UV beam 160, and emits signal-wavelength light.

UV beam 160 is desirably positioned such that it encompasses focal point 118a of laser beam 118, which is the location of the maximum power density of laser beam 118. Even more desirably, UV beam 160 is positioned such that it substantially encompasses a nominal hazard zone of laser beam 118 (not shown), similar to nominal hazard zone 28 discussed above in FIG. 1. This allows UV beam 160 to be directed at glove 138 when glove 138 enters the nominal hazard zone of laser beam 118.

Sensor 158 is a sensor for sensing signal-wavelength light emitted toward emitter/sensor 154. Sensor 158 includes electronics that generate an output signal to control 120 via line 148. The output signal has a first state and a second state based on whether sensor 158 senses signal-wavelength light having an intensity that equals or exceeds a preset threshold. The output signal of sensor 158 is in the first state when sensor 158 does not sense any signal-wavelength light or when the intensity of sensed signal-wavelength light does not exceed the preset threshold. The output signal of sensor 158 switches to the second state when the intensity of sensed signal-wavelength light equals or exceeds the preset threshold.

The preset threshold prevents the output signal of sensor 158 from accidentally switching to the second state due to the detection of background signal-wavelength light. For example, during a laser welding operation, a measurable amount of signal-wavelength light may be emitted from melted metal of wire 152. Therefore, the preset threshold is desirably set above the intensity of such background signal-wavelength light. This allows sensor 158 to discriminate between sensed signal-wavelength light emitted from glove 138 and background signal-wavelength light. Accordingly, UV-beam emitter 156 desirably emits UV beam 160 at an intensity that allows glove 138 to emit signal-wavelength light at an intensity that is greater than the preset threshold. This allows the portions of signal-wavelength light emitted from glove 138 toward emitter/sensor 154 to exceed the preset threshold.

The states of the output signal of sensor 158 direct the control of laser 116 by control 120 in a similar manner to that discussed above in FIG. 1 for sensor 46. The first state of the output signal does not direct control 120 to control laser 116 in any particular manner. As such, laser 116 generates laser beam 118 at the operating level when the user depresses pedal actuator 122. The second state of the output signal, however, directs control 120 to cause laser 116 to reduce the intensity of laser beam 118 from the operating level to the standby level, regardless of the other received signals. As such, the output signal in the second state of sensor 158 overrides signals from pedal actuator 122, and reduces the intensity of the laser beam 118 to the standby level even when pedal actuator 122 is in the second state.

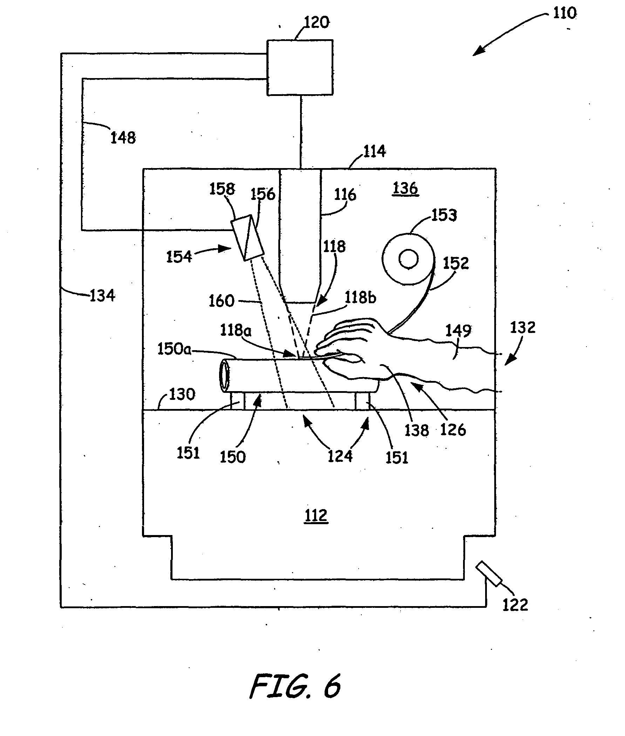

As shown in FIG. 6, glove 138 is in a partially-extended position while the user is manipulating wire 152 during a welding process with laser 116. The user extends glove 138 from the retracted position by applying a counter force greater than the bias force exerted by ribbed portion 150. Glove 138 may be moved from the retracted position to a variety of positions between and including the retracted position and the extended position.

During a welding process, the user grasps wire 152 with hand 126, and manually feeds wire 152 to a process location that is adjacent outer surface 150a and is in a pathway of laser beam 118, as shown in FIG. 6. The user then depresses pedal 122, thereby generating laser beam 118 at an operating level for laser welding. Laser beam 118 melts the portion of wire 152 in the pathway of laser beam 118, allowing the melted portion of wire 152 to fuse to outer surface 150a.

As the user manipulates wire 152 during the welding process, the user moves hand 126 and glove 138 to various positions within housing 114. Whether sensor 158 senses signal-wavelength light is generally based on the position of hand 126 of the user and glove 138. For example, when glove 138 is in the retracted position (as shown above in FIG. 5) or in a partially-extended position (as shown in FIG. 6), glove 138 is not disposed within UV beam 160. As such, laser 116 may generate laser beam 118 at the operating level for laser processing. However, if hand 126 moves far enough from the retracted position, glove 138 will enter UV beam 160, thereby absorbing portions of UV beam 160 and emitting signal-wavelength light toward emitter/sensor 154. Because the intensity of the sensed signal-wavelength light exceeds the preset threshold, the intensity of laser beam 116 will then be reduced to the standby level to protect hand 126 of the user from exposure to laser beam 118.

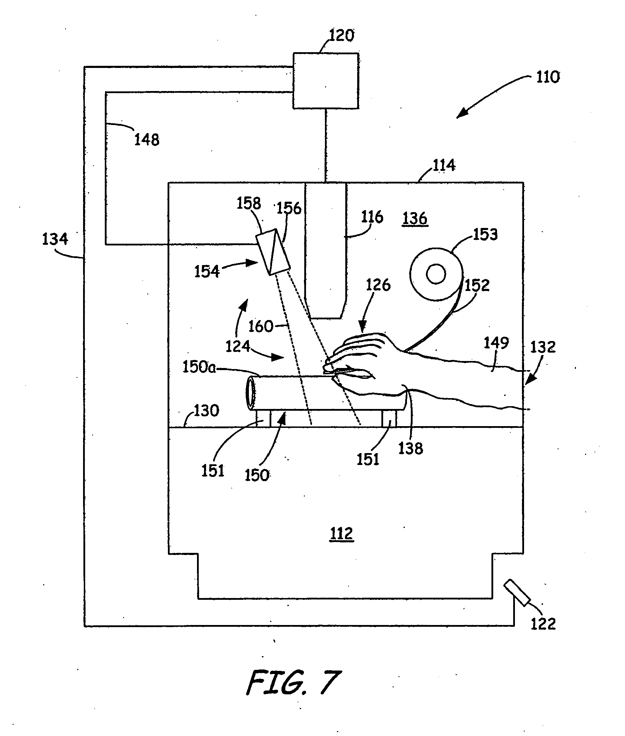

FIG. 7 shows glove 138 in an extended position, where user's hand 126 extends within UV beam 160. When the user extends hand 126 within UV beam 160, portions of UV beam 160 absorb into glove 138, which causes signal-wavelength light to emit from glove 138. While the emitted signal-wavelength light is scattered within housing 114, portions of signal-wavelength light are directed toward emitter/sensor 154. Sensor 158 then senses these portions of signal-wavelength light. Because the sensed portions of signal-wavelength light are emitted from glove 138, the intensities exceed the preset threshold. Control 120 then correspondingly causes laser 116 to reduce the intensity of laser beam 118 to the standby level. This automatically reduces the intensity of laser beam 118 to a safe or zero-intensity level while hand 126 of the user is disposed within UV beam 160. Therefore, the user is not required to manually deactivate laser 116 to work within the region of UV beam 160.

When the user moves hand 126 toward the retracted position, glove 138 exits UV beam 160. As a result, sensor 158 no longer senses signal-wavelength light. The output signal of sensor 158 then switches back to the first state, and the intensity of laser beam 118 increases back to the operating level in response to the user depressing pedal actuator 122. As such, while depressing pedal actuator 122, the user may repeatedly move hand 126 in and out UV beam 160 without the worry of accidental exposure to laser beam 118. Safety system 124 reduces the intensity of laser beam 118 to a safe or zero-intensity level while hand 126 is within UV beam 160 and allows the intensity of laser 116 increase back to the operating level when hand 126 leaves UV beam 160. This reduces the risk of exposure to laser beam 118, thereby increasing safety when welding with laser 116.

In an alternative embodiment to that disclosed in FIGS. 5-7, emitter/sensor 154 may alternatively emit and detect light wavelengths of particular colors (rather than UV-wavelength light). Example of suitable color-based systems for emitter/sensor 154 include the trade designated "COLORMAX-1000 DISCRETE", "COLORMAX-1000 HEX" and "COLORMAX-1000 RGB" Color Sensors, which are commercially available from EMX Industries, Inc., Cleveland, OH. In this embodiment, glove 138 may include materials that reflect or emit the given color associated with the color sensor for detecting when glove 138 enters the given color beam.

Although the present invention has been described with reference to preferred embodiments, workers skilled in the art will recognize that changes may be made in form and detail without departing from the scope of the invention. For example, while laser apparatuses 10 and 110 are each disclosed above as having a single safety system (e.g., safety systems 24 and 124), multiple safety systems of the present invention may be used. In particular, a pair of safety systems 24 are desirably used so that the user may safely work with both hands within housing 14. Alternatively, multiple safety systems 124 may be used to increase the volumetric coverage of UV beams 160.

## Claims

1. A method for welding a metal part (50, 150) with a laser (16; 116) that generates a laser beam (18; 118), the method comprising:
manually feeding successive portions of a filler material (52; 152) with a hand (26; 126) of a user to a process location that is adjacent the metal part (50; 150) and is in a pathway of the laser beam (18; 118);
generating the laser beam (18; 118), wherein the laser beam (18; 118) melts the manually fed successive portions of the filler material (52; 152);
cooling the melted successive portions of the filler material (52; 152), thereby allowing the melted successive portions to fuse to the metal part (50; 150); and
controlling an intensity of the laser beam (18; 118) based on a sensed position of the user's hand (26; 126) relative to the laser beam (18; 118).

2. The method of claim 1, further comprising sensing a position of the user's hand (26; 126) with a sensor (46; 158).

3. The method of claim 2, wherein sensing the position of the user's hand (26) is a function of a distance between the sensor (46) and a signal-producing component (44) operably connected to the user's hand (26).

4. A method for welding a metal part (50; 150) with a laser (16; 116) that generates a laser beam (18; 118), the method comprising:
switching an actuator (22; 122) between an inactive state and an activated state;
manually feeding successive portions of a filler material (52; 152) with a hand (26; 126) of a user to a process location that is adjacent the metal part (50; 150) and is in a pathway of the laser beam (18; 118);
sensing a position of the user's hand (26; 126) with a sensor (46; 158), wherein the sensor (46; 158) switches from a first state to a second state based on the sensed position of the user's hand (26; 126) relative to the laser beam (18; 118);
controlling the laser (16; 116) to generate the laser beam (18; 118) at an operating level when the actuator (22; 122) is in the activated state and the sensor (46; 158) is in the first state, wherein the laser beam (18; 118) melts the manually fed successive portions of the filler material (52; 152).

5. The method of any preceding claim, wherein the process location is disposed at a converging portion of the laser beam (18; 118).

6. The method of any preceding claim, wherein the laser (16; 116) is controlled to reduce an intensity of the laser beam (18; 118) from an operating level to a standby level based on the sensed position of the user's hand (26; 126).

7. The method of claim 6, wherein the laser is controlled reduce the intensity of the laser beam (18) to the standby level when the user's hand (26) enters a nominal hazard zone (28) of the laser beam (18).

8. The method of any preceding claim, further comprising manually repositioning the metal part (50; 150).

9. A method for restoring a surface of a metal part (50; 150) with a laser (16; 116) that generates a laser beam (18; 118), the method comprising:
positioning the surface (50a; 150a) of the metal part (50; 150) in a pathway of the laser beam (18; 118);
retaining a filler material (52; 152) with a hand (26; 126) of a user;
manually positioning the filler material (52; 152) adjacent the surface (50a; 150a) of the metal part (50; 150) and in the pathway of the laser beam (18; 118);
sensing a position of the user's hand (26; 126) with a sensor (46; 158), wherein the sensor (46; 158) switches from a first state to a second state when the user's hand (26; 126) enters a nominal hazard zone of the laser beam;
controlling the laser (16; 116) to generate the laser beam (18; 118) at an operating level when the sensor (46; 158) is in the first state, wherein the laser beam (18; 118) melts the filler material (52; 152), thereby allowing the melted filler material (52; 152) to fuse to the surface (50a; 150a) of the metal part (50; 150).

10. The method of claim 9, wherein the laser (16; 116) is controlled to reduce an intensity of the laser beam (18; 118) from the operating level to a standby level when sensor (46; 158) is in the second state.

11. The method of claim 9 or 10, wherein sensing the position of the user's hand (26) is a function of a distance between the sensor (46) and a signal-producing component (44) operably connected to the user's hand (26).

12. The method of any of claims 9 to 11, wherein the laser (18) is controlled reduce the intensity of the laser beam (18) to the standby level when the user's hand (26) enters a nominal hazard zone (28) of the laser beam (18).

13. The method of any preceding claim, wherein the filler material (52; 152) is supplied in a form selected from the group consisting of a wire and a rod stock.

14. The method of any preceding claim, wherein the metal part comprises a tube (50; 150) having an outer surface (50a; 150a), wherein at least part of the melted successive portions of the filler material (52; 152) fuse to the outer surface (50a; 150a).

15. The method of any preceding claim, further comprising receiving the user's hand (26; 126) within a protective barrier (38; 138).
